# EUROPEAN PATENT APPLICATION

(11) **EP 3 401 295 A1**
(43) Date of publication of application: **14.11.2018**
(21) Application number: 16890647.7
(22) Date of filing: 17.11.2016
(51) Int. Cl.: C04B 37/00, F23M 5/00, F01D 25/00, F02C 7/00, F16B 7/00, F16B 11/00, F23R 3/42

(54) **JOINED STRUCTURE, COMBUSTOR, AND COMBUSTION DEVICE**

(30) Priority: 16.02.2016 JP 2016026815
(71) Applicant: Mitsubishi Heavy Industries, Ltd., Tokyo 108-8215 (JP)
(72) Inventor: KURIMURA, Takayuki, Tokyo 108-8215 (JP); MATSUMOTO, Mineaki, Tokyo 108-8215 (JP); TSURU, Yasuhiko, Tokyo 108-8215 (JP); NISHIKAWA, Kosuke, Tokyo 108-8215 (JP); HIROKANE, Mariko, Tokyo 108-8215 (JP)
(74) Representative: Henkel, Breuer & Partner
(86) International application number: PCT/JP2016/084068
(87) International publication number: WO 2017/141510

(57) **Abstract**

Provided is a joined structure that has joining sections 15 in which a plurality of tubular bodies 11, 12 formed of a ceramic-based composite material are joined with each other via intermediate materials 16 by abutting end surfaces 11B, 12A of the tubular bodies, wherein the end surfaces 11B of the tubular body 11 are inclined so as to protrude from inner surfaces 11D of the tubular body 11 toward outer surfaces 11C thereof, and the end surfaces 12A of the tubular body 12 are inclined so as to protrude from outer surfaces 12C of the tubular body 12 toward inner surfaces 12D thereof.

## Description

### Technical Field

The present invention relates to a joined structure in which end surfaces of a plurality of tubular bodies formed of a ceramic-based composite material are joined to each other, and a combustor and a combustion device including the joined structure.

### Background Art

In general, a ceramic-based composite material (Ceramic Matrix Composite: CMC) has properties which are excellent in corrosion resistance, heat resistance, or the like, and thus, is applied to a wide variety of fields. In recent years, technologies for forming an apparatus (for example, aircraft engine, industrial gas turbine, or the like) formed of metal in the related art with a ceramic-based composite material have been sought. In general, dimensions (sizes) of parts which are formed of the ceramic-based composite material and to be manufactured may be limited by a scale of manufacturing facilities or a manufacturing method, and thus, in order to form a large-sized apparatus, it is necessary to join the parts to each other. Accordingly, a technology for joining the parts formed of the ceramic-based composite material to each other is known (for example, refer to PTL 1) .

### Citation List

### Patent Literature

[PTL 1] Japanese Patent No. 5768101

### Summary of Invention

### Technical Problem

In above-described PTL 1, each end surface of a container body (first ceramic member) and a cover (second ceramic member) is formed as a flat surface or a stepped flat surface, and the end surfaces abut each other and are joined to each other via an intermediate material. In this configuration, it is possible to secure airtightness of the container. However, for example, in a case where the joined structure of the related art is applied to a structure such as a combustor configured by joining a plurality of parts (tubular bodies) formed in a tubular shape to each other, there is a concern that load resistance cannot be sufficiently secured in the joint section. In addition, unlike a metal material, in the ceramic-based composite material, a method to joint structures such as welding or bolt fastening cannot be used, and a minute protrusion structure may not easily be provided.

The present invention is made in consideration of the above-described circumstances, and an object thereof is to provide a joined structure, a combustor, and a combustion device capable of improving load resistance in a joint section by a simple structure.

### Solution to Problem

In order to solve the above-described problems and achieve the above-described object, according to an aspect of the present invention, there is provided a joined structure which has a joint section in which a plurality of tubular bodies formed of a ceramic-based composite material are joined to each other such that end surfaces of the tubular bodies abut each other via an intermediate material, in which the joint section is configured such that each of the end surfaces of the joined tubular bodies is inclined from one of an inner surface and an outer surface of the tubular body toward the other.

According to this configuration, each of the end surfaces of the joined tubular bodies is inclined from one of an inner surface and an outer surface of the tubular body toward the other. Therefore, the inclined end surfaces abut each other, and thus, it is possible to increase a joint area and to prevent shifting of the tubular body in a radial direction. Accordingly, it is possible to improve load resistance in the joint section by a simple structure.

In this configuration, the joint section may include a step section in which a portion of each of the end surfaces of the tubular bodies protrudes and interlocks with each other.

In addition, the plurality of tubular bodies may include a first tubular body whose opening area decreases in a state where the joint section is interposed and a second tubular body whose opening area increases in the state where the joint section is interposed, an end surface of the first tubular body may be inclined to protrude from an inner surface of the first tubular body toward an outer surface of the first tubular body, and an end surface of the second tubular body may be inclined to protrude from an outer surface of the second tubular body toward an inner surface of the second tubular body.

In addition, according to another aspect of the present invention, there is provided a joined structure which has a joint section in which a plurality of tubular bodies formed of a ceramic-based composite material are joined to each other such that end surfaces of the tubular bodies abut each other via an intermediate material, in which the joint section includes a groove section which extends in a circumferential direction on an end surface of one tubular body and a fitting piece which is fitted to the groove section and protrudes from an end surface of the other tubular body.

According to this configuration, the joint section includes a groove section which extends in a circumferential direction on an end surface of one tubular body and a fitting piece which is fitted to the groove section and protrudes from an end surface of the other tubular body. Therefore, the fitting piece is fitted to the groove section, and thus, it is possible to improve toughness of the joint section of the tubular bodies. Accordingly, it is possible to improve load resistance in the joint section by a simple structure.

Moreover, according to still another aspect of the present invention, there is provided a joined structure which has a joint section in which a plurality of tubular bodies formed of a ceramic-based composite material are joined to each other such that end surfaces of the tubular bodies abut each other via an intermediate material, in which the joint section includes groove sections which extend in a circumferential direction on each of end surfaces of both tubular bodies facing each other and a fitting piece which is fitted to both groove sections.

According to this configuration, the joint section includes the groove sections which extend in a circumferential direction on each of end surfaces of both tubular bodies facing each other and a fitting piece which is fitted to both groove sections. Therefore, the fitting piece is fitted to both groove sections, and thus, it is possible to improve toughness of the joint section of the tubular bodies. Accordingly, it is possible to improve load resistance in the joint section by a simple structure.

In addition, in the tubular body, a plate surface of one plate material formed of the ceramic-based composite material may be joined to an end surface of the other plate material, and a recessed section to which the end surface of the other plate material is fitted may be provided on the plate surface of the one plate material.

Moreover, according to still another aspect of the present invention, there is provided a combustor including: the above-described joined structure, in which a fuel gas which is mixed with air is combusted in the tubular body.

In addition, according to still another aspect of the present invention, there is provided a combustion device including: the above-described combustor. Advantageous Effects of Invention

According to the present invention, it is possible to improve load resistance in the joint section by a simple structure.

### Brief Description of Drawings

Fig. 1 is a diagram showing a functional configuration of a jet engine including a combustor according to a first embodiment.
Fig. 2 is a perspective diagram showing an appearance of the combustor.
Fig. 3 is a sectional view showing a state before plate materials configuring a tubular body are joined to each other.
Fig. 4 is a sectional view showing a joined state of the plate materials configuring the tubular body.
Fig. 5 is a partially enlarged sectional view of the joined state.
Fig. 6 is a sectional view showing a state before the tubular bodies are joined to each other.
Fig. 7 is a sectional view showing a joined state of the tubular bodies.
Fig. 8 is a partially enlarged sectional view of a joint section.
Fig. 9 is a partially enlarged sectional view of a joint section according to a modification example.
Fig. 10 is a sectional view showing a state before plate materials configuring tubular bodies of a fuel reforming mechanism are joined to each other.
Fig. 11 is a sectional view showing a joined state where the plate materials configuring the tubular bodies of the fuel reforming mechanism are joined to each other.
Fig. 12 is a sectional view showing a state before plate materials configuring tubular bodies of a fuel reforming mechanism according to a modification example are joined to each other.
Fig. 13 is a sectional view showing a joined state of the plate materials configuring the tubular bodies.
Fig. 14 is a partially enlarged sectional view showing a state of a joint section according to a second embodiment before joining is performed.
Fig. 15 is a partially enlarged sectional view of the joined joint section.
Fig. 16 is a partially enlarged sectional view showing a state of a joint section according to a third embodiment before joining is performed.
Fig. 17 is a partially enlarged sectional view of the joined joint section.

### Description of Embodiments

Hereinafter, embodiments according to the present invention will be described in detail with reference the drawings. In addition, the present invention is not limited by the embodiments. Moreover, components of the embodiments include components which can be replaced by a person skilled in the art and components which are substantially the same. In addition, components described later can be appropriately interlocked with each other.

### [First Embodiment]

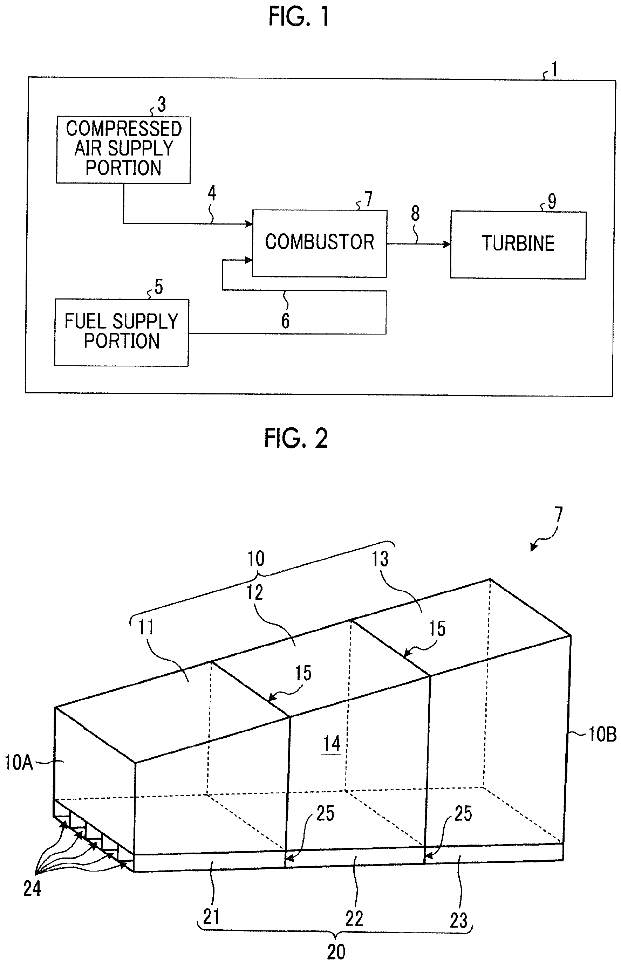

Fig. 1 is a diagram showing a functional configuration of a jet engine including a combustor according to a first embodiment. A jet engine (combustion device) 1 is mounted on an aircraft or the like and expands a high-temperature and high-pressure gas in a turbine so as to rotate a main shaft. Accordingly, kinetic energy of a high-speed jet (high-speed exhaust) injected from a turbine outlet is used as a propulsive force of the aircraft. As shown in Fig. 1, the jet engine 1 includes a compressed air supply portion 3, a fuel supply portion 5, a combustor 7, and a turbine 9. The compressed air supply portion 3 introduces and compresses a gas serving as a working fluid, that is, air, and supplies an air flow to the combustor 7 through an air supply path 4. The fuel supply portion 5 supplies a liquid jet fuel to the combustor 7 through a fuel supply path 6. When a liquid fuel passes through the fuel supply path 6, the liquid fuel is reformed by being heated by heat of the combustor 7, is mixed with air, and is supplied into the combustor 7. The combustor 7 combusts the supplied air and fuel gas and supplies a generated high-temperature and high-pressure gas to the turbine 9 through a combustion gas channel 8. In the turbine 9, the main shaft is rotated by the high-temperature and high-pressure gas, and a high-speed jet air flow is injected from the turbine outflow.

Fig. 2 is a perspective diagram showing an appearance of the combustor. The combustor 7 includes a combustor body 10 and a fuel reforming mechanism 20 which is disposed to be adjacent to the combustor body 10. Both the combustor body 10 and the fuel reforming mechanism 20 are formed in a tubular shape with a ceramic-based composite material (Ceramic Matrix Composites: hereinafter referred to as CMC). CMC is a material improved in strength by combining inorganic particles, metal particles, whiskers, short fibers, long fibers, or the like with ceramics. For example, CMC has a smaller specific gravity and higher heat resistance than a nickel base superalloy, and thus, is suitable for a material of the combustor 7. CMC is roughly divided into an oxide based CMC (for example, Al₂O₃ (aluminum oxide)) and a non-oxide based CMC (for example, SiC (silicon carbide)), and in the present embodiment, CMC in which SiC fibers are compounded into non-oxide based SiC ceramics is used.

In general, in this type of CMC, dimensions (sizes) of parts to be manufactured may be limited by a scale of manufacturing facilities or a manufacturing method. Meanwhile, particularly, the combustor 7 is long (has several meters) in flow directions of a fuel gas and air, and thus, it is necessary to join the manufactured parts to each other in order to form a large-sized apparatus such as the combustor 7. Specifically, as shown in Fig. 2, the combustor body 10 is formed by joining a plurality of (three in the present embodiment) tubular bodies 11, 12, and 13 formed in a tubular shape in a longitudinal direction (the flow direction of each of the fuel gas and the air). In addition, similarly to the combustor body 10, the fuel reforming mechanism 20 is formed by joining a plurality (three in the present embodiment) of tubular bodies 21, 22, and 23 whose openings are arranged side by side in the longitudinal direction. In the present embodiment, the case where each of the combustor body 10 and the fuel reforming mechanism 20 is formed by joining three tubular bodies to each other is described. However, it is needless to say that the present invention is not limited to this.

In the combustor body 10, a combustion chamber 14 in which the fuel gas is combusted is formed in inner spaces of the tubular bodies 11, 12, and 13, and an opening area (a length in a vertical direction in Fig. 2) of the combustion chamber 14 increases from an inlet end 10A of the combustor body 10 toward an outlet end 10B. Accordingly, the high-temperature and high-pressure gas combusted in the combustion chamber 14 is expanded toward the outlet end 10B and is supplied to the turbine 9. The tubular bodies 11, 12, and 13 of the combustor body 10 are joined to each other by joint sections 15 and 15.

In addition, the fuel reforming mechanism 20 includes a plurality of (five in the present embodiment) fuel channels 24 which are formed side by side in the tubular bodies 21, 22, and 23. The fuel channels 24 configure a portion of the fuel supply path 6, and when the liquid fuel passes through the fuel channel 24, the liquid fuel is heated by the combustor body 10 so as to be reformed. In the present embodiment, the fuel reforming mechanism 20 is disposed below the combustor body 10. However, the fuel reforming mechanism 20 may be disposed in an internal space of the combustor body 10. Similarly to the combustor body 10, in the fuel reforming mechanism 20, the tubular bodies 21, 22, and 23 are joined to each other by joint sections 25 and 25.

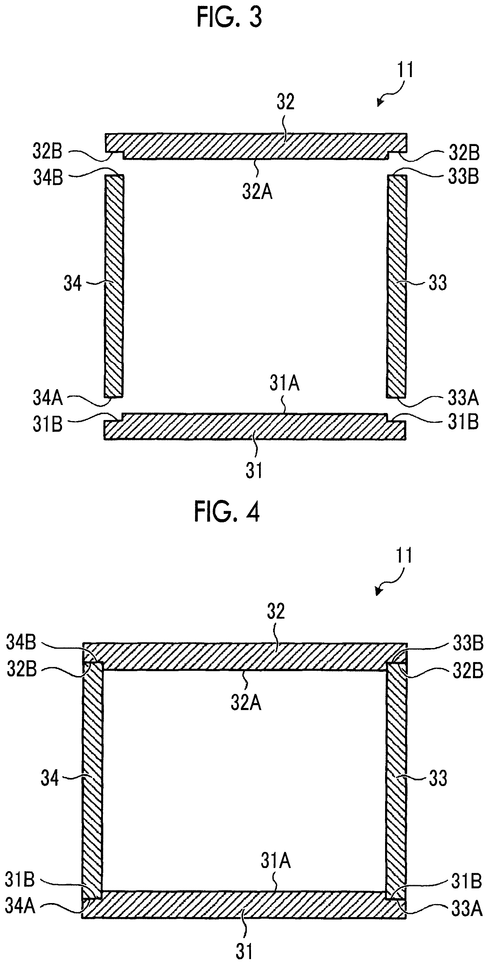

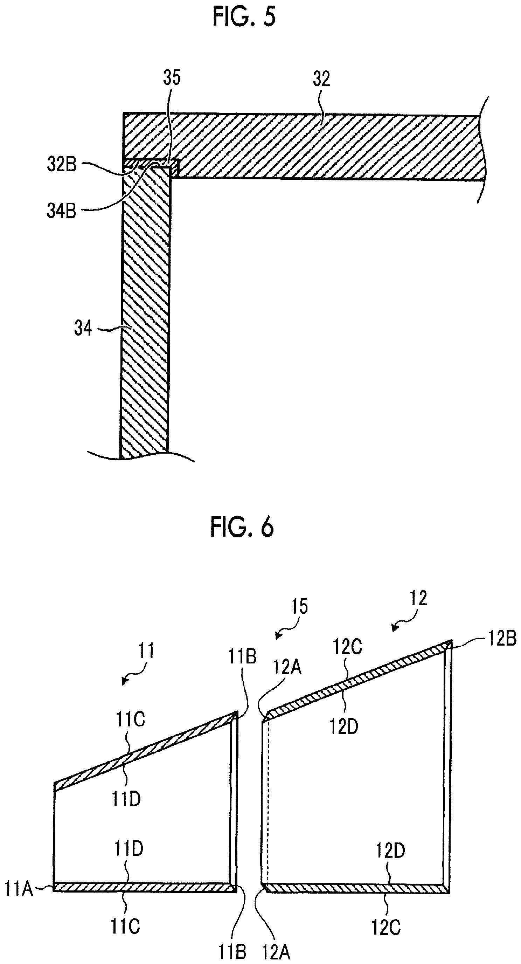

Next, a joined structure in the combustor body 10 will be described. Fig. 3 is a sectional view showing a state before plate materials configuring a tubular body are joined to each other. Fig. 4 is a sectional view showing a joined state of the plate materials configuring the tubular body. Fig. 5 is a partially enlarged sectional view of the joined state. Here, the tubular body 11 is described as an example. However, each of the tubular bodies 12 and 13 has the same configuration. As shown in Fig. 3, the tubular body 11 is formed by joining four plate materials such as a bottom plate 31, a top plate 32, a right plate 33, and a left plate 34 to each other. Each plate material of the bottom plate 31, the top plate 32, the right plate 33, and the left plate 34 is formed of a non-oxide based (SiC based) CMC.

As shown in Figs. 3 and 4, the bottom plate (one plate material) 31 includes recessed sections 31B and 31B recessed from an inner surface 31A on both end portions of the inner surface (plate surface) 31A facing the top plate 32. The recessed sections 31B and 31B extend in a depth direction of the bottom plate 31, and lower end surfaces 33A and 34A of the right plate (other plate materials) 33 and the left plate (other plate materials) 34 are fitted to the recessed sections 31B and 31B. Similarly, the top plate (one plate material) 32 includes recessed sections 32B and 32B recessed from an inner surface 32A on both end portions of the inner surface (plate surface) 32A facing the bottom plate 31. The recessed sections 31B and 31B extend in a depth direction of the top plate 32, and upper end surfaces 33B and 34B of the right plate (other plate materials) 33 and the left plate (other plate materials) 34 are fitted to the recessed sections 32B and 32B. In addition, as shown in Fig. 5, the recessed section 32B provided on the inner surface 32A of the top plate 32 and the upper end surface 34B of the left plate 34 are joined to each other via an intermediate material 35. This intermediate material 35 is used for joining in CMC, and molten Si, a brazing material (glass, silicon, metal base), and ceramic precursor can be used. The intermediate material 35 is provided not only on the upper left side but also at all four locations shown in Fig. 5. According to this configuration, four plate materials are joined to each other, and thus, it is possible to form the tubular bodies 11 to 13 having high load resistance (joining strength).

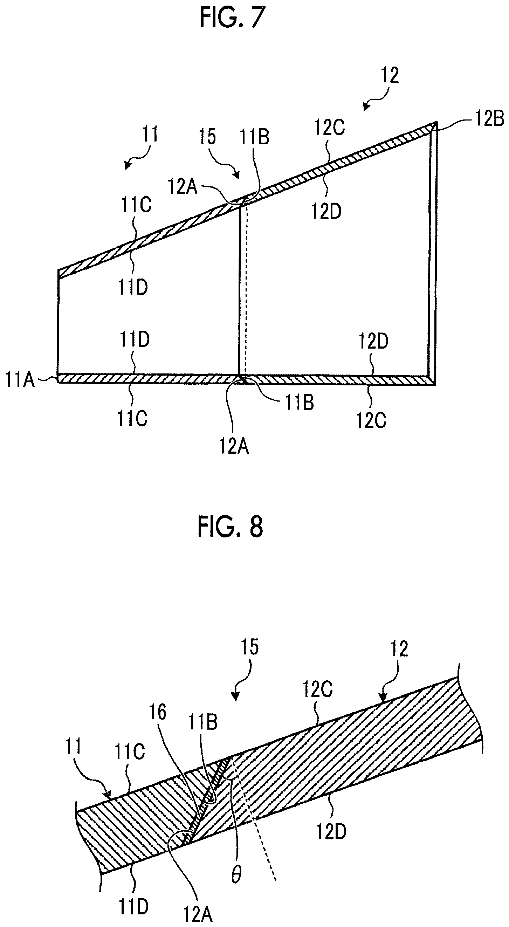

Next, a joined structure of the joint section 15 which joins the tubular bodies 11 to 13 to each other will be described. Fig. 6 is a sectional view showing a state before the tubular bodies are joined to each other. Fig. 7 is a sectional view showing a joined state of the tubular bodies. Fig. 8 is a partially enlarged sectional view of a joint section. Here, the joint section 15 between the tubular body 11 and the tubular body 12 is described as an example. However, the joint section 15 between the tubular body 12 and the tubular body 13 has a similar configuration. As shown in Figs. 6 and 7, end surfaces 11B of the tubular body 11 and end surfaces 12A of the tubular body 12 abut each other, and thus, the tubular body 11 and the tubular body 12 are joined to each other. In this case, as shown in Fig. 8, in the joint section 15, the end surface 11B of the tubular body 11 and the end surface 12A of the tubular body 12 are joined to each other via an intermediate material 16. The intermediate material 16 has a configuration similar to that of the above-described intermediate material 35.

As shown in Fig. 2, in the present embodiment, the combustor body 10 is formed such that the opening area (the length in the vertical direction) increases from the inlet end 10A toward the outlet end 10B. Accordingly, similarly to the combustor body 10, in each of the tubular bodies 11 and 12, an opening area of each tubular body increases from an inlet end thereof toward an outlet end thereof. That is, the opening area in the joint section 15 is the same for both the tubular bodies 11 and 12, and in a state where the joint section 15 is interposed between the tubular bodies 11 and 12, in the tubular body (first tubular body) 11, the opening area decreases toward the inlet end side to be smaller than the opening area in the joint section 15 (outlet end). In addition, on the contrary, in the tubular body (second tubular body) 12, in the state where the joint section 15 (inlet end) is interposed between the tubular bodies 11 and 12, the opening area increases toward the outlet end side to be larger than the opening area in the joint section 15.

In the present embodiment, in order to increase the load resistance (joining strength) in the joint section 15, the outlet end surface 11B of the tubular body 11 is inclined to protrude from an inner surface 11D of the tubular body 11 toward an outer surface 11C thereof, and the inlet end surface 12A of the tubular body 12 is inclined to protrude from an outer surface 12C of the tubular body 12 toward an inner surface 12D thereof. In this way, each of the end surfaces 11B and 12A of the tubular bodies 11 and 12 are formed to be inclined, and thus, a joint distance (area) between the end surfaces 11B and 12A can be largely secured, and it is possible to prevent the tubular bodies 11 and 12 from being shifted in a radial direction (a direction orthogonal to flow directions of the fuel gas and the air). Accordingly, it is possible to increase the load resistance (joining strength) in the joint section 15 by a simple structure. In addition, in the present embodiment, as shown in Fig. 7, the end surface 12A of the tubular body 12 having a large opening area enters the tubular body 11 having a small opening area, and thus, the end surface 12A is joined to the end surface 11B of the tubular body 11.

According to this configuration, in a case where each of the tubular bodies 11 and 12 is expanded in the radial direction, the end surface 12A of the tubular body 12 is pressed to the end surface 11B of the tubular body 11 so as to hold the joint. Accordingly, as the combustor body 10, even in an apparatus under a heating environment, it is possible to increase the load resistance (joining strength) in the joint section 15.

In addition, as shown in Fig. 8, each of the end surfaces 11B and 12A of the tubular bodies 11 and 12 is inclined at a predetermined inclination angle θ with respect to a normal line on each of the inner surfaces 11D and 12D of the tubular bodies 11 and 12. The inclination angle θ influences the load resistance (joining strength) in the joint section 15, and in the present embodiment, it is preferable that the inclination angle θ is set to 10° to 60°. Moreover, as shown in Figs. 6 and 7, an outlet end surface 12B of the tubular body 12 is inclined to protrude from the inner surface 12D of the tubular body 12 toward the outer surface 12C and is joined to an inlet end surface (not shown) of the tubular body 13 which is similarly formed to the inlet end surface 12A of the tubular body 12. In addition, in the present embodiment, the inlet end surface 11A of the tubular body 11 is not joined to the tubular body and thus, is a flat surface.

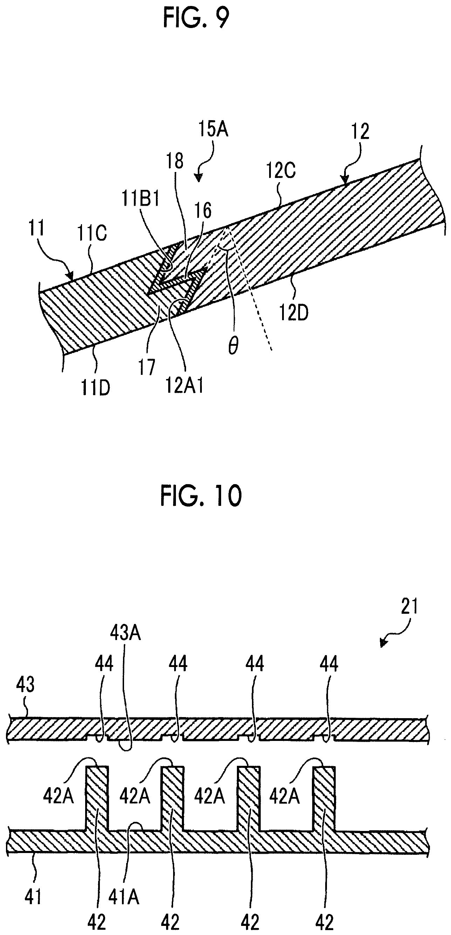

Fig. 9 is a partially enlarged sectional view of a joint section according to a modification example. The above-described joint section 15 is configured such that each of the end surfaces 11B and 12A of the tubular bodies 11 and 12 is uniformly inclined. However, as shown in Fig. 9, a joint section 15A according to the modification example includes step sections 17 and 18 in which inclined end surfaces 11B1 and 12A1 of the tubular bodies 11 and 12 partially protrude and are interlocked with each other. Specifically, the tubular body 11 includes a step section 17 in which the inner surface 11D side of the end surface 11B1 protrudes, and the tubular body 12 includes a step section 18 in which the outer surface 12C side of the end surface 12A1 protrudes. The step sections 17 and 18 are formed to have shapes and sizes to be interlocked with each other, and the end surfaces 11B1 and 12A1 are joined to each other via the intermediate material 16. In addition, each of the end surfaces 11B1 and 12A1 of the tubular bodies 11 and 12 is inclined at a predetermined inclination angle θ with respect to a normal line on each of the inner surfaces 11D and 12D of the tubular bodies 11 and 12, and it is preferable that the inclination angle θ is set to 10° to 60°.

In this configuration, the joint section 15A includes the step sections 17 and 18 in which inclined end surfaces 11B1 and 12A1 of the tubular bodies 11 and 12 partially protrude and are interlocked with each other, the step sections 17 and 18 are firmly interlocked with each other, and thus, it is possible to further increase the load resistance (joining strength) in the joint section 15A.

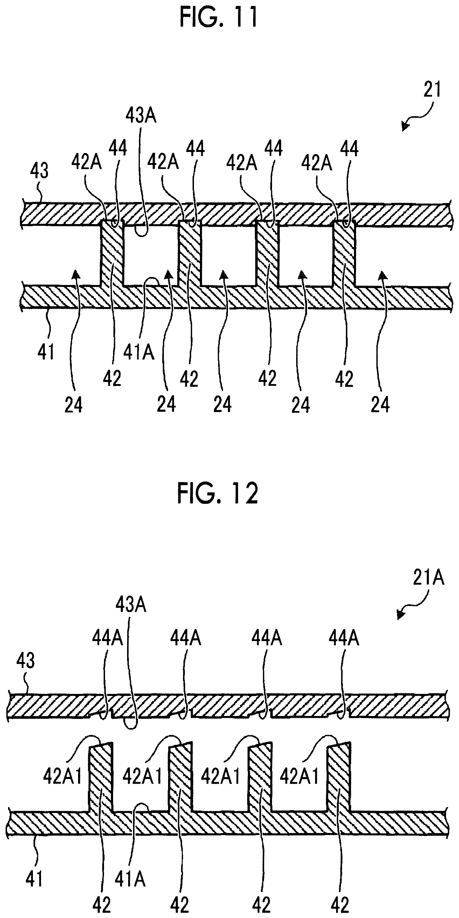

Next, the fuel reforming mechanism 20 will be described. As described above, the fuel reforming mechanism 20 is formed by joining the tubular bodies 21, 22, and 23 having the plurality of fuel channels 24 formed side by side by the joint sections 25 and 25 (Fig. 2). Fig. 10 is a sectional view showing a state before plate materials configuring the tubular bodies of the fuel reforming mechanism are joined to each other. Fig. 11 is a sectional view showing a joined state of the tubular bodies of the fuel reforming mechanism. Here, the tubular body 21 is described as an example. However, each of the tubular bodies 22 and 23 has the same configuration. As shown in Fig. 10, the tubular body 21 includes a bottom plate 41, a plurality of (four in the drawing) partition plates 42 which uprightly stands on an inner surface 41A of the bottom plate 41, and a top plate 43 which are joined to upper end surfaces 42A of the partition plates 42. The bottom plate 41, the partition plates 42, and the top plate 43 are formed of a non-oxide based (SiC based) CMC.

Each of the partition plates 42 is a member which partitions a space in the tubular body 21, and extends in the depth direction of the bottom plate 41 by the same length as the bottom plate 41. As shown in Fig. 11, the spaces portioned by the partition plates 42 configure the fuel channels 24.

In the present embodiment, the partition plates 42 are integrally formed with the bottom plate 41. However, the partition plates 42 may be joined to the inner surface 41A of the bottom plate 41. As shown in Figs. 10 and 11, the top plate (one plate material) 43 includes recessed sections 44 which are flatly recessed from an inner surface 43A at positions corresponding to the partition plates 42 of the inner surface (plate surface) 43A facing the bottom plate 41. Each of the recessed sections 44 is formed in a groove shape which extends in the depth direction of the top plate 43, and the upper flat end surface 42A of each partition plate 42 is fitted to the recessed section 44. In addition, although it is not shown, the recessed sections 44 provided on the inner surface 43A of the top plate 43 and the upper end surfaces 42A of the partition plates 42 are joined to each other via intermediate materials. According to this configuration, the partition plates 42 provided on the bottom plate 41 and the top plate 43 are joined to each other, and thus, it is possible to form the tubular bodies 21 to 23 having high load resistance (joining strength).

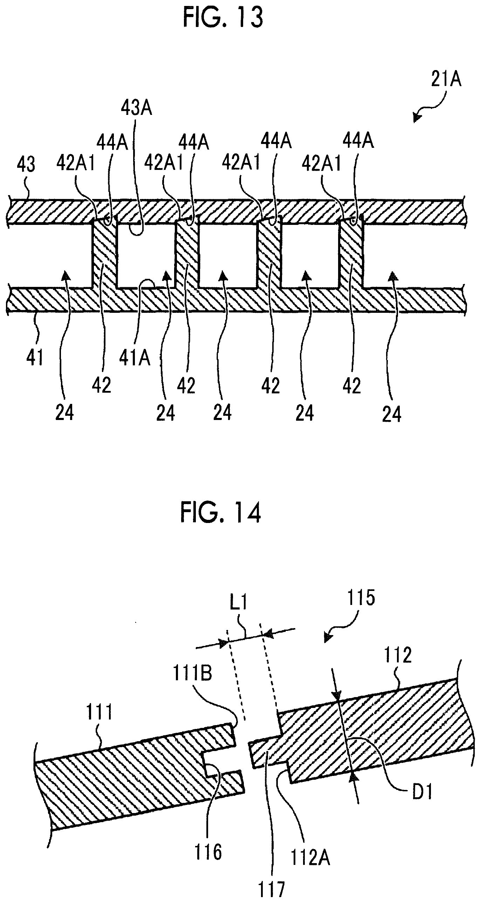

Fig. 12 is a sectional view showing a state before plate materials configuring tubular bodies of a fuel reforming mechanism according to a modification example are joined to each other, and Fig. 13 is a sectional view showing a joined state of the plate materials configuring the tubular bodies. In the above-described configuration, in the tubular body 21, the end surface 42A of each of the partition plate 42 is formed as a flat surface and the shape of the recessed section 44 is flatly recessed from the inner surface 43A of the top plate 43 in accordance with the end surface 42A. However, the present invention is not limited to this. For example, as shown in Figs. 12 and 13, in a tubular body 21A, an end surface 42A1 of each partition plate 42 may be formed in an inclined surface and a shape of a recessed section 44A is formed in an inclined groove shape to be inclined from the inner surface 43A of the top plate 43 in accordance with the end surface 42A1. In addition, although it is not shown, the tubular body 21A may be configured to include step sections in which the inclined end surface 42A1 of each partition plate 42 and a bottom surface of the inclined recessed section 44A partially protrude and are interlocked with each other. According to the configurations, the inclined end surfaces and the step sections are firmly interlocked with each other, and thus, it is possible to form the tubular body 21A having higher load resistance (joining strength).

In addition, although it is not shown, similarly to the joint section 15, in the joint section 25 by which the tubular body 21 and the tubular body 22 are joined to each other, the end surface of the tubular body 21 is inclined to protrude from the inner surface of the tubular body 21 toward the outer surface thereof, the end surface of the tubular body 22 is inclined to protrude from the outer surface of the tubular body 22 toward the inner surface thereof, and thus, it is possible to prevent the tubular bodies 21 and 22 from being shifted in the radial direction (a direction orthogonal to flow directions of the fuel gas and the air). Accordingly, it is possible to increase the load resistance (joining strength) in the joint section 25 by a simple structure. In addition, the joint section 25 by which the tubular body 22 and the tubular body 23 are joined to each other is similar to the joint section 25 by which the tubular body 21 and the tubular body 22 are joined to each other.

### [Second Embodiment]

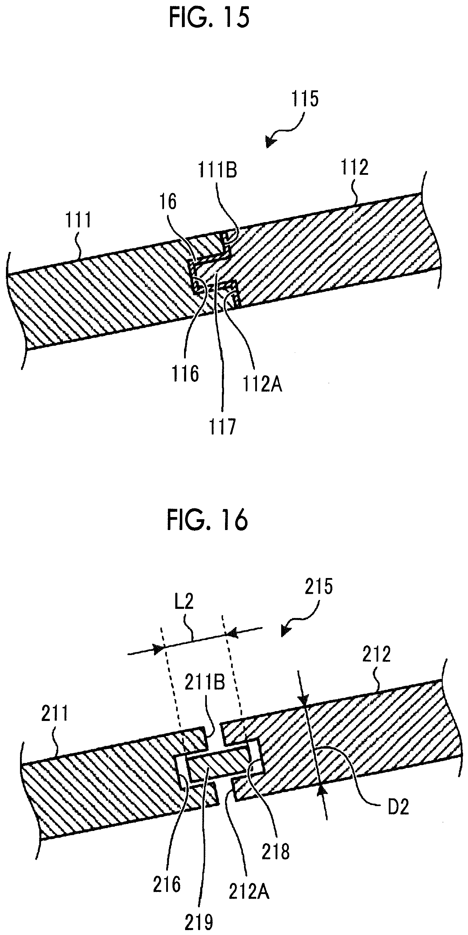

Next, a joint section according to a second embodiment will be described. Fig. 14 is a partially enlarged sectional view showing a state of a joint section according to the second embodiment before joining is performed, and Fig. 15 is a partially enlarged sectional view of the joined joint section. Figs. 14 and 15 correspond to Fig. 8, and show a configuration of a joint section 115 in which an end surface 111B of a tubular body 111 and an end surface 112A of a tubular body 112 configuring the combustor body 10 abut each other, and thus, the tubular body 111 and the tubular body 112 are joined to each other.

In the second embodiment, as shown in Figs. 14 and 15, in order to increase the load resistance (joining strength) in the joint section 115, the joint section 115 includes a groove section 116 which extends in a circumferential direction on the end surface 111B of the tubular body (one tubular body) 111 and a fitting piece 117 which is fitted to the groove section 116 and protrudes from an end surface 112A of the tubular body (the other tubular body) 112. As shown in Fig. 15, the intermediate material 16 is disposed between the end surface 111B and the end surface 112A, and the end surface 111B and the end surface 112A are joined to each other via the intermediate material 16.

A length L1 of the fitting piece 117 protruding from the end surface 112A of the tubular body 112 and a thickness D1 of the plate material of the tubular body 112 influence the load resistance (joining strength) in the joint section 115, and in the present embodiment, it is preferable that a ratio of L1/D1 is set to 0.3 to 2.

In the present embodiment, in order to increase the load resistance (joining strength) in the joint section 115, the joint section 115 includes the groove section 116 which extends in the circumferential direction on the end surface 111B of the tubular body 111 and the fitting piece 117 which is fitted to the groove section 116 and protrudes from the end surface 112A of the tubular body 112. Accordingly, it is possible to largely secure a joint distance (area) between the end surfaces 111B and 112A and it is possible to improve toughness of the joint section 115. Accordingly, it is possible to increase the load resistance (joining strength) in the joint section 115 by a simple structure.

### [Third Embodiment]

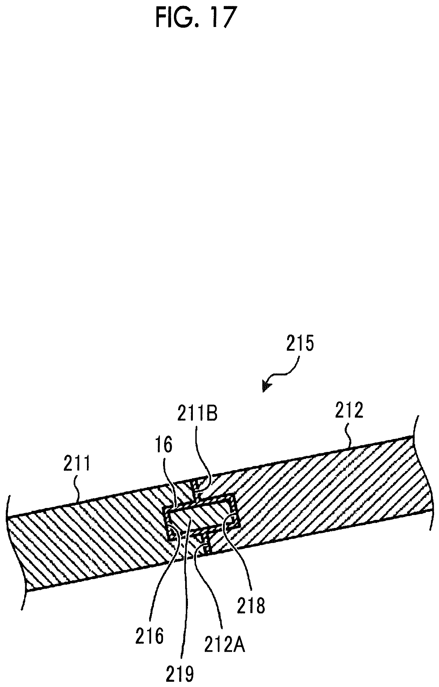

Next, a joint section according to a third embodiment will be described. Fig. 16 is a partially enlarged sectional view showing a state of a joint section according to the third embodiment before joining is performed, and Fig. 17 is a partially enlarged sectional view of the joined joint section. Figs. 16 and 17 correspond to Fig. 8, and show a configuration of a joint section 215 in which an end surface 211B of a tubular body 211 and an end surface 212A of a tubular body 212 configuring the combustor body 10 abut each other, and thus, the tubular body 211 and the tubular body 212 are joined to each other.

In the third embodiment, as shown in Figs. 16 and 17, in order to increase the load resistance (joining strength) in the joint section 215, the joint section 215 includes a groove section 216 which extends in a circumferential direction on the end surface 211B of the tubular body (one tubular body) 211, a groove section 218 which faces the groove section 216 and extends in the circumferential direction on the end surface 212A of the tubular body (the other tubular body) 212, and a fitting piece 219 which is fitted to both groove sections 216 and 218. As shown in Fig. 17, the intermediate material 16 is disposed between the end surface 211B and the end surface 212A, and the end surface 211B and the end surface 212A are joined to each other via the intermediate material 16.

A length L2 of the fitting piece 219 which is fitted to both groove sections 216 and 218 and a thickness D2 of each of the plate materials of the tubular bodies 211 and 212 influence the load resistance (joining strength) in the joint section 215, and in the present embodiment, it is preferable that a ratio of L2/D2 is set to 0.3 to 2.

In the present embodiment, in order to increase the load resistance (joining strength) in the joint section 215, the joint section 215 includes the groove section 216 which extends in the circumferential direction on the end surface 211B of the tubular body 211, the groove section 218 which faces the groove section 216 and extends in the circumferential direction on the end surface 212A of the tubular body (the other tubular body) 212, and the fitting piece 219 which is fitted to both groove sections 216 and 218. Accordingly, it is possible to largely secure a joint distance (area) between the end surfaces 211B and 212A and it is possible to improve toughness of the joint section 215. Accordingly, it is possible to increase the load resistance (joining strength) in the joint section 215 by a simple structure.

Hereinbefore, embodiments of the present invention are described. However, the embodiments are presented as examples and are not intended to limit the scope of the invention. The embodiments can be implemented in various other forms, and various omissions, substitutions, and modifications can be made without departing from the gist of the invention. As long as the embodiments and modification examples thereof are included in the scope or the gist of the present invention, the embodiments or the modification examples are included in the invention described in claims or the equivalent scope thereof. In the above-described embodiment, the jet engine 1 is described as an example of a combustion apparatus having the combustor 7. However, the present invention is not limited to this, and the present invention can be used in an industrial gas turbine which rotates a turbine and drives an axis center using a high-temperature combustion gas supplied from the combustor 7.

Moreover, it is needless to say that the structure of each of the joint sections 115 and 215 according to the second and third embodiments is applied to the joint section 25 of the fuel reforming mechanism 20. In addition, in the second and third embodiments, the joint sections 115 and 215 are respectively configured to include the fitting pieces 117 and 219 each having one stage. However, the fitting pieces 117 and 219 each having a plurality of stages may be configured.

### Reference Signs List

1: jet engine (combustion device)
7: combustor
10: combustor body
10A: inlet end
10B: outlet end
11: tubular body (first tubular body)
11B, 11B1: end surface
11C: outer surface
11D: inner surface
12: tubular body (second tubular body)
12A, 12A1: end surface
12C: outer surface
12D: inner surface
13: tubular body
14: combustion chamber
15, 15A, 25, 115, 215: joint section
16, 35: intermediate material
17, 18: step section
20: fuel reforming mechanism
21, 22, 23: tubular body
24: fuel channel
31: bottom plate
31A, 32A: inner surface (plate surface)
31B, 32B: recessed section
32: top plate
33: right plate
33A, 33B: end surface
34: left plate
34A, 34B: end surface
41: bottom plate
42: partition plate
42A, 42A1: end surface
43: top plate
43A: inner surface (plate surface)
44, 44A: recessed section
111, 211: tubular body (one tubular body)
111B, 211B: end surface
112, 212: tubular body (the other tubular body)
112A, 212A: end surface
116, 216, 218: groove section
117, 219: fitting piece

## Claims

1. A joined structure which has a joint section in which a plurality of tubular bodies formed of a ceramic-based composite material are joined to each other such that end surfaces of the tubular bodies abut each other via an intermediate material,
wherein the joint section is configured such that each of the end surfaces of the joined tubular bodies is inclined from one of an inner surface and an outer surface of the tubular body toward the other.

2. The joined structure according to claim 1,
wherein the joint section includes a step section in which a portion of each of the end surfaces of the tubular bodies protrudes and interlocks with each other.

3. The joined structure according to claim 1 or 2,
wherein the plurality of tubular bodies includes a first tubular body whose opening area decreases in a state where the joint section is interposed and a second tubular body whose opening area increases in the state where the joint section is interposed, an end surface of the first tubular body is inclined to protrude from an inner surface of the first tubular body toward an outer surface of the first tubular body, and an end surface of the second tubular body is inclined to protrude from an outer surface of the second tubular body toward an inner surface of the second tubular body.

4. A joined structure which has a joint section in which a plurality of tubular bodies formed of a ceramic-based composite material are joined to each other such that end surfaces of the tubular bodies abut each other via an intermediate material,
wherein the joint section includes a groove section which extends in a circumferential direction on an end surface of one tubular body and a fitting piece which is fitted to the groove section and protrudes from an end surface of the other tubular body.

5. A joined structure which has a joint section in which a plurality of tubular bodies formed of a ceramic-based composite material are joined to each other such that end surfaces of the tubular bodies abut each other via an intermediate material,
wherein the joint section includes groove sections which extend in a circumferential direction on each of end surfaces of both tubular bodies facing each other and a fitting piece which is fitted to both groove sections.

6. The joined structure according to any one of claims 1 to 5,
wherein in the tubular body, a plate surface of one plate material formed of the ceramic-based composite material is joined to an end surface of the other plate material, and a recessed section to which the end surface of the other plate material is fitted is provided on the plate surface of the one plate material.

7. A combustor comprising:
the joined structure according to any one of claims 1 to 6,
wherein a fuel gas which is mixed with air is combusted in the tubular body.

8. A combustion device comprising:
the combustor according to claim 7.
